# EUROPEAN PATENT APPLICATION

(11) **EP 3 406 315 A1**
(43) Date of publication of application: **28.11.2018**
(21) Application number: 17172666.4
(22) Date of filing: 24.05.2017
(51) Int. Cl.: B01D 1/00, B01D 3/10, C02F 1/04, C02F 1/06

(54) **A METHOD AND AN EVAPORATOR FOR PURIFYING LIQUID WASTE**

(71) Applicant: T Control Oy, 28610 Pori (FI)
(72) Inventor: Korhonen, Teppo Tapani, 28610 Pori (FI); Korhonen, Arttu Tapani, 28610 Pori (FI)
(74) Representative: Koivisto, Harri Kristian

(57) **Abstract**

An evaporator and a method for purifying a liquid waste, comprising a low-pressure chamber (120); a feed inlet (105) for receiving the liquid waste into the low-pressure chamber (120); a compressor for reducing the pressure in the low-pressure chamber (120), wherein the low pressure causes evaporating of the liquid waste to a vapour and a solidifying waste; and a vapour outlet (106) for removing the vapour from the low-pressure chamber (120). A removable vessel (110) is positioned inside the low-pressure chamber (120), wherein the removable vessel (110) is configured to receive the liquid waste from the feed inlet (105) and, as a response to the low pressure, to collect the solidifying waste. The removable vessel (110) comprises an open upper portion for removing the vapour from the removable vessel (110) to the vapour outlet (106).

## Description

### BACKGROUND

Liquid waste, for example, wastewater may be purified by evaporation. When the liquid waste is evaporated, it separates into a solidifying portion and a vapour. In one example, the vapour comprises mostly purified water. The solidifying portion may solidify completely when the process continues. The solid portion comprises mostly waste that should be transported to a waste management facility. Examples of liquid waste are liquids that have been used in the metal processing industry and mechanical workshops. Evaporators and flash evaporators have been proven effective in separating the waste from the liquid.

The solidified waste portion may comprise harmful substances. Handling the solid waste portion in the workshop should be simple without the risk of losing any harmful substances. The harmful substances may be pulverized and escape into the workshop. During the process, the solidifying waste portion may crystallize or solidify into various portions of the evaporator, clogging the system.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

A method and an evaporator for purifying a liquid waste are disclosed. The evaporator comprises a low-pressure chamber. In one example, the low pressure is defined as being lower than the ambient atmospheric pressure; in one example, the low pressure is defined as the state approaching zero pressure. The liquid waste is led to a removable vessel inside the low-pressure chamber. The low pressure and/or the temperature cause the liquid waste to distil into a solidifying waste and a vapour. The vapour is led out from the low-pressure chamber, wherein the vapour condenses back into a liquid form, such as water.

The low-pressure chamber is configured to comprise a removable vessel, wherein the liquid waste is led to the vessel. The solidifying portion of the liquid waste, the solidifying waste, is collected into the removable vessel. The removable vessel may be covered and sealed, enabling the transport to a toxic and waste treatment facility. The removable vessel may be discarded after use.

The removable vessel reduces or removes the risk of harmful substances escaping to the workshop's interior. The toxic and/or waste material may be safely removed from the evaporator, for example, for further transport. Many solutions according to prior art require that a certified waste or toxic management disposal unit would be used for cleaning or emptying the evaporator. Alternatively, or in addition, the solution reduces the risk of the solidifying material crystallizing onto piping of the system, such as onto a feed inlet or vapour outlet. The process may be run continuously, allowing effective workflow at the mechanical workshop. Further applications for the evaporator may be found at coating facilities, hospitals or at any place that needs to effectively purify liquid waste.

Many of the attendant features will be more readily appreciated as they become better understood by reference to the following detailed description considered in connection with the accompanying drawings. The embodiments described below are not limited to implementations which solve any or all the disadvantages of known liquid waste purifying solutions.

### BRIEF DESCRIPTION OF THE DRAWINGS

The present description will be better understood from the following detailed description read in light of the accompanying drawings, wherein
FIG. 1 illustrates schematically one embodiment of the evaporator;
FIG. 2 illustrates a flowchart identifying steps of the method for purifying a liquid waste.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

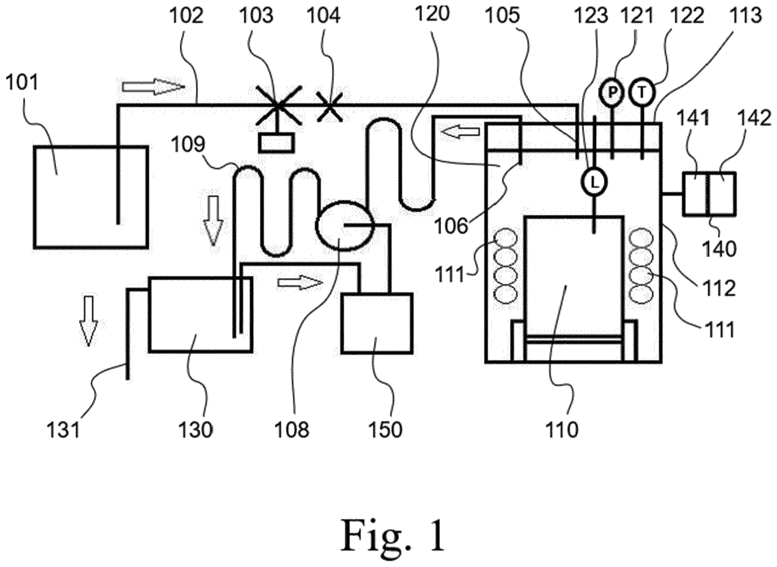

FIG. 1 illustrates schematically one example of an evaporator. A container 101 contains liquid waste, which is led into the evaporator via a first piping 102. The liquid waste may be wastewater, chemicals used for manufacturing or coating products, or, as one example, a used cutting fluid at a mechanical workshop. The container 101 may contain several different types of liquid waste that are mixed and stored for the purification process. The mechanical workshop may be responsible for ensuring that the liquid waste is safely stored and disposed. In some examples, managing the liquid waste may be difficult and expensive, requiring a certified collection process.

The first piping 102 may comprise two valves for controlling the flow of the liquid waste to the evaporator. A shutdown valve 104 may be controlled manually, allowing complete closure of the first piping 102, for example, during maintenance of the evaporator. A relay-controlled feed inlet valve 103 allows the liquid waste to travel though the first piping 102 to the evaporator according to a controller 140 configured to control the evaporation process.

The first piping 102 is connected to a feed inlet 105. The feed inlet 105 is configured to feed the liquid waste through the low-pressure chamber 120. In this example, the feed inlet 105 discharges the liquid waste to the low-pressure chamber 120, more particularly into the removable vessel 110. A compressor 108 is configured to reduce the pressure in the low-pressure chamber 120. In one example, the compressor 108 is a vacuum compression pump. A low pressure is herein defined as being a pressure lower than the ambient pressure. In one embodiment, the low pressure is defined as approaching a vacuum.

The low pressure causes the liquid waste to evaporate into a vapour and a solidifying waste, when the liquid waste is exposed to rapidly reducing pressure. In one example, the evaporator is a flash evaporator. The process may be enhanced and/or controlled with a heating element 111 configured to heat or control the temperature of the low-pressure chamber 120 during the evaporation process. In one example, the heating element 111 is an electric heating element positioned around the removable vessel 110. In one example, the heating element 111 is an inductive heating element and the removable vessel 110 or at least a portion of the low-pressure chamber is made of ferromagnetic material.

The evaporator comprises a vapour outlet 106 for removing the vapour from the low-pressure chamber 120, wherein the vapour is led to the compressor 108 via a second piping 107. The vapour is condensed to a liquid in a third piping 109 that may be formed in the shape of a steam condenser. In one example, the third piping 109 is made of metal to ensure that heat dissipates through the piping wall. The third piping 109 may be manufactured as long enough and having turns to fit the third piping 109 into a sufficient space to enable vapour to be cooled and condensed. The condensed liquid is collected into a liquid container 130. In one example, the liquid, for example, water, has been purified sufficiently, allowing the liquid to be recycled in the manufacturing process. A first portion of the purified liquid is recycled into the manufacturing process via an outlet 131. A second portion of the purified liquid is led into a recycling container 150, wherein the cooled purified liquid is recycled back to the condensing phase, to the compressor 108. The cooled purified liquid enables the vapour to condense faster.

The evaporator comprises a removable vessel 110 inside the low-pressure chamber 120. The feed inlet 105 is configured to fill the removable vessel 100 inside the low-pressure chamber 120. In one example, the feed inlet 105 extends above the removable vessel 110, wherein the liquid waste is configured to be poured into the removable vessel 110. In one embodiment, the removable vessel 110 comprises an opening extending upwards for receiving the liquid waste. As a response to the low pressure, the liquid waste turns into a solidifying waste and a vapour. The removable vessel 110 is configured to collect the solidifying waste. The removable vessel 110 comprises an open upper portion for extracting the vapour from the removable vessel 110 to the vapour outlet 106. The solidifying waste may crystallize or solidify inside the removable vessel 110. In one embodiment, the removable vessel 110 is a bucket made of ferromagnetic material, with a lid that may be used to seal the removable vessel 110 when it is removed from the low-pressure chamber 120.

In one embodiment, the low-pressure chamber 120 comprises a surface level detector 123 for detecting the surface level of the liquid waste in the removable vessel 110. As a portion of the liquid waste turns into vapour, the surface level of a substance inside the removable vessel 110 gets lower, wherein the substance comprises a mixture of the solidifying waste and the liquid waste. As the process advances, the waste concentration of the solidifying waste and the liquid waste increases. Eventually, the solidifying waste solidifies inside the removable vessel 110. The surface level detector 123 is configured to detect the surface level of the mixture of the solidifying waste and the liquid waste inside the removable vessel 110. The surface level information causes the feed inlet valve 103 to supply additional liquid waste to the removable vessel 110 in order to retain the surface level within predetermined surface limits. Floats for detecting the surface level may not be practical in this application, as the mechanical system may suffer from solidifying waste attaching to moving parts.

In one example, the surface level detector 123 comprises electrodes, wherein the conductivity between two electrodes indicates whether they are submerged and under the liquid waste surface level. The surface level detector 123 may comprise at least three electrodes to detect at least two surface levels. In one embodiment, the surface level detector 123 comprises an ultrasonic surface level detector. In one embodiment, the surface level detector 123 comprises an optical surface level detector comprising, for example, a laser.

The surface level is, in one example, maintained as high as possible, thereby increasing the speed of the purification process. A high surface level ensures that the solidifying waste has enough mass to reserve heat, wherein time is not consumed during the process in heating the liquid waste to operational temperature. The surface level detector 123 may be a sensor configured to detect the surface level through an opening in the removable vessel 110. In one embodiment, the surface level detector 123 is integrated into the removable vessel 110, for example, the electrodes may be connectable through the surface of the removable vessel 110. In one example, the removable vessel 110 comprises contacts for the electrodes. When the removable vessel 110 is inside the evaporator, the contacts are configured to be connected to the electrodes and the evaporator may utilize the surface level information.

In one example, the low-pressure chamber 120 comprises a temperature sensor 122 and a heating element 111 for heating and controlling the temperature of the low-pressure chamber 120. In one example, the temperature sensor is a PT100 type component. The process temperature may be kept within predetermined temperature limits. In one example, the temperature range is between 70°C ...75°C. In one example, the temperature range is between 50°C ...90°C. Different temperature ranges may be utilized according to the distilling characteristics of the liquid to be purified.

In one embodiment, the evaporator comprises at least one processor 141 and a memory 142 for storing instructions that, when executed, cause the evaporator to perform the functionality described herein. The at least one processor 141 and the memory 142 are components of the controller 140. The controller 140 is configured to receive information from the sensors, such as the surface level information from the surface level detector 123, the temperature information from the temperature sensor 122 and the pressure information from the pressure sensor 121. The controller 140 may operate the evaporator according to the information group consisting of pressure, temperature and surface level. As an example, the evaporator may detect that the pressure drops rapidly. That may be caused by the solidifying waste becoming solid, thereby not releasing more vapour to the low-pressure chamber 120. The controller 140 may increase the amount of liquid waste in the removable vessel 110 if the surface level has not exceeded the maximum level and the pressure is below a predetermined pressure level.

In one embodiment, the functionality between detecting the surface level and controlling the feed inlet valve 103 is accomplished by relays. The surface level detector 123 comprises three electrodes at different levels configured to operate as a response to the conductivity of the liquid waste. The lowest electrode is compared to two upper electrodes. When the middle electrode is not conducting, the surface level is below the middle electrode. The relay-controlled feed inlet valve 103 opens to top up the mixture of the solidifying waste and the liquid waste inside the removable vessel 110. The liquid waste flows to the removable vessel 110 until the surface level reaches the uppermost electrode, and an electric current flows between the uppermost electrode and the lowest electrode, causing the relay-controlled feed inlet valve 103 to close.

In one embodiment, the temperature control may be executed with a PID controller. The temperature sensor is positioned inside the low-pressure chamber 120 or inside the removable vessel 110, configured to measure temperature and provide the temperature information to the PID controller. The PID controller is controlling multiple thermal resistors. The temperature may be controlled by selecting the number of thermal resistors in use. All thermal resistors are used when the temperature is below the optimal process temperature and the temperature should be raised quickly. The temperature may be sustained at a constant level by limiting the number of active thermal resistors. In one embodiment, the heating element 111 is an inductive heating element configured as a loop around the removable vessel 110, or, when the removable vessel 110 is not made of ferromagnetic material, around a portion of the low-pressure chamber 120 comprising ferromagnetic material.

In one embodiment, the low-pressure chamber 120 comprises an openable portion 113 for removing the removable vessel 110 from the low-pressure chamber 120 in an upright position. The removable vessel 110 may comprise a lid or means for closing the opening configured for the feed inlet 105 and the vapour outlet 106. Removing the removable vessel 110 from the low-pressure chamber 120 in an upright position ensures that harmful substances do not escape from the removable vessel 110. In one embodiment the openable portion 113 is the top portion of the low-pressure chamber 120, configured to be connected to the lower portion 112 of the low-pressure chamber 120. The connection between the top portion 113 and the lower portion 112 may comprise a gasket securing the low pressure or vacuum inside the low-pressure chamber 120. The connection may comprise one or more closing means for tightening the connection. Examples of the closing means are flanges, threads, threaded rods, wing nuts, bayonet locks or alike.

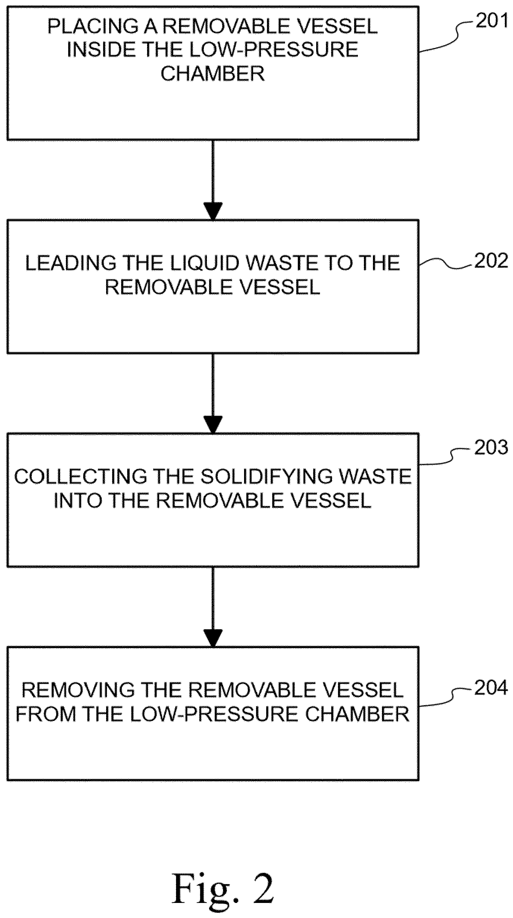

FIG. 2 illustrates the steps of the method for purifying a liquid waste, comprising receiving the liquid waste through a feed inlet 105 to the low-pressure chamber 120, evaporating the liquid waste in the low-pressure chamber 120 to a vapour and a solidifying waste, and removing the vapour from the low-pressure chamber 120 through a vapour outlet 106. According to step 201, the method comprises placing a removable vessel 110 having an open upper portion inside the low-pressure chamber 120. In step 202, the liquid waste is led from the feed inlet 105 to the removable vessel 110 inside the low-pressure chamber 120, causing the liquid waste to evaporate. According to step 203, the method comprises collecting the solidifying waste into the removable vessel 110. In step 204, the method comprises removing the removable vessel 110 from the low-pressure chamber 120.

An example discloses a method for purifying a liquid waste, comprising an evaporator having a low-pressure chamber; receiving the liquid waste through a feed inlet into the low-pressure chamber; evaporating the liquid waste in the low-pressure chamber to a vapour and to a solidifying waste; and removing the vapour from the low-pressure chamber through a vapour outlet. The method comprises placing a removable vessel having an open upper portion inside the low-pressure chamber; leading the liquid waste from the feed inlet to the removable vessel inside the low-pressure chamber, causing the liquid waste to evaporate; collecting the solidifying waste into the removable vessel; and removing the removable vessel from the low-pressure chamber. In an embodiment, the method comprises removing the removable vessel from the low-pressure chamber in an upright position. In an embodiment, the method comprises a temperature sensor and a heating element for heating and controlling the temperature of the low-pressure chamber to retain the temperature within predetermined temperature limits. In an embodiment, the method comprises detecting the surface level of the liquid waste in the removable vessel and supplying additional liquid waste to the removable vessel to retain the surface level within predetermined surface limits. In an embodiment, the liquid waste is wastewater.

Alternatively, or in addition, an evaporator for purifying a liquid waste is disclosed, comprising a low-pressure chamber; a feed inlet for receiving the liquid waste into the low-pressure chamber; a compressor for reducing the pressure in the low-pressure chamber, wherein the low pressure causes evaporating of the liquid waste to a vapour and a solidifying waste; and a vapour outlet for removing the vapour from the low-pressure chamber. The evaporator comprises a removable vessel positioned inside the low-pressure chamber, wherein the removable vessel is configured to receive the liquid waste from the feed inlet and, as a response to the low pressure, to collect the solidifying waste; said removable vessel comprising an open upper portion for removing the vapour from the removable vessel to the vapour outlet. In one embodiment, the low-pressure chamber comprises an openable portion for removing the removable vessel from the low-pressure chamber in an upright position. In one embodiment, the low-pressure chamber comprises a temperature sensor and a heating element for heating and controlling the temperature of the low-pressure chamber in order to retain the temperature within predetermined temperature limits. In an embodiment, the low-pressure chamber comprises a surface level detector for detecting the surface level of the liquid waste in the removable vessel and a feed inlet valve for supplying additional liquid waste to the removable vessel in order to retain the surface level within predetermined surface limits. In one embodiment, the liquid waste is wastewater.

Alternatively, or in addition, the controlling functionality described herein can be performed, at least in part, by one or more hardware components or hardware logic components. An example of the control system described hereinbefore is a computing-based device comprising one or more processors which may be microprocessors, controllers or any other suitable type of processors for processing computer-executable instructions to control the evaporation process. The computer-executable instructions may be provided using any computer-readable media that is accessible by a computing-based device. Computer-readable media may include, for example, computer storage media, such as memory and communications media. Computer storage media, such as memory, includes volatile and non-volatile, removable and non-removable media implemented in any method or technology for storage of information, such as computer-readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer-readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device, it will be appreciated that the storage may be distributed or located remotely and accessed via a network or other communication link, for example, by using a communication interface.

The methods described herein may be performed by software in machine-readable form on a tangible storage medium, e.g. in the form of a computer program comprising computer program code means adapted to perform all the steps of any of the methods described herein when the program is run on a computer and where the computer program may be embodied on a computer-readable medium. Examples of tangible storage media include computer storage devices comprising computer-readable media, such as disks, thumb drives, memory etc., and do not only include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A method for purifying a liquid waste, comprising:
an evaporator having a low-pressure chamber (120);
receiving the liquid waste through a feed inlet (105) into the low-pressure chamber (120);
evaporating the liquid waste in the low-pressure chamber (120) to a vapour and a solidifying waste; and
removing the vapour from the low-pressure chamber (120) through a vapour outlet (106), **characterized in that** the method comprises:
placing a removable vessel (110) having an open upper portion inside the low-pressure chamber (120);
leading the liquid waste from the feed inlet (105) to the removable vessel (110) inside the low-pressure chamber (120), causing the liquid waste to evaporate;
collecting the solidifying waste into the removable vessel (110); and
removing the removable vessel (110) from the low-pressure chamber (120).

2. A method according to claim 1, **characterized by** removing the removable vessel (110) from the low-pressure chamber (120) in an upright position.

3. A method according to claim 1 or claim 2, **characterized by** comprising a temperature sensor (122) and a heating element (111) for heating and controlling the temperature of the low-pressure chamber (120) to retain the temperature within predetermined temperature limits.

4. A method according to any of the claims 1 to 3, **characterized by** detecting the surface level of the liquid waste in the removable vessel (110) and supplying additional liquid waste to the removable vessel (110) to retain the surface level within predetermined surface limits.

5. A method according to any of the claims 1 to 4, **characterized in that** the liquid waste is wastewater.

6. An evaporator for purifying a liquid waste, comprising:
a low-pressure chamber (120);
a feed inlet (105) for receiving the liquid waste into the low-pressure chamber (120);
a compressor for reducing the pressure in the low-pressure chamber (120), wherein the low pressure causes evaporating of the liquid waste to a vapour and a solidifying waste; and
a vapour outlet (106) for removing the vapour from the low-pressure chamber (120), **characterized by** comprising:
a removable vessel (110) positioned inside the low-pressure chamber (120), wherein the removable vessel (110) is configured to receive the liquid waste from the feed inlet (105) and, as a response to the low pressure, to collect the solidifying waste;
said removable vessel (110) comprising an open upper portion for removing the vapour from the removable vessel (110) to the vapour outlet (106).

7. An evaporator according to claim 6, **characterized by** the low-pressure chamber (120) comprising an openable portion for removing the removable vessel (110) from the low-pressure chamber (120) in an upright position.

8. An evaporator according to claim 6 or claim 7, **characterized by** the low-pressure chamber (120) comprising a temperature sensor (122) and a heating element (111) for heating and controlling the temperature of the low-pressure chamber (120) in order to retain the temperature within predetermined temperature limits.

9. An evaporator according to any of the claims 6 to 8, **characterized by** the low-pressure chamber (120) comprising a surface level detector for detecting the surface level of the liquid waste in the removable vessel (110) and a feed inlet (105) valve for supplying additional liquid waste to the removable vessel (110) in order to retain the surface level within predetermined surface limits.

10. An evaporator according to any of the claims 6 to 9, **characterized in that** the liquid waste is wastewater.
